# EUROPEAN PATENT SPECIFICATION

(11) **EP 0 349 346 B1**
(45) Date of publication and mention of the grant of the patent: **08.01.1997**
(21) Application number: 89306690.2
(22) Date of filing: 30.06.1989
(51) Int. Cl.: H04Q 11/04, H04M 11/06

(54) **Communication terminal apparatus and its control method**
Kommunikationsendgerät und Steuerungsverfahren dafür
Dispositif terminal de communication et sa méthode de commande

(30) Priority: 01.07.1988 JP 165661/88; 01.07.1988 JP 165662/88; 01.07.1988 JP 165663/88
(43) Date of publication of application: 03.01.1990
(73) Proprietor: KABUSHIKI KAISHA TOSHIBA, Kawasaki-shi, Kanagawa-ken 210 (JP)
(72) Inventor: Ogawa, Fukushige, 1-1-1, Shibaura Minato-ku Tokyo (JP)
(74) Representative: Freed, Arthur Woolf

(56) References cited:
- EP-A- 0 313 313
- EP-A- 0 357 427
- PROCEEDINGS OF THE NATIONAL COMMUNICATIONS FORUM. vol. 40, no. I, 1986, OAK BROOK, ILLINOIS pages 596 - 604; W.H.Chriss et al.: "Basic rate interface capabilities to support ISDN terminals"
- IEEE JOURNAL ON SELECTED AREAS IN COMMUNICATIONS; Vol. SAC-4, no. 8, November 1986, NEW YORK (US), pages 1188 - 1192; N.Q.Duc: "ISDN Terminals and Integrated Services Delivery "
- ICC '86, Session 1, Paper 4 vol. 1, 22 June 1986, Toronto, CA pages 1 - 5; J.A. Swart: "ISDN Business Services"
- PATENT ABSTRACTS OF JAPAN vol. 13, no. 483 (E-839)(3831) 02 November 1989, & JP-A- 01 190066 (TOSHIBA) 31 July 1989.

## Description

The present invention relates to communication terminal apparatuses and control methods thereof which can be connected to an integrated service digital network (hereinafter, which will be referred to as the ISDN) and, more particularly, to a communication terminal apparatus and its control method which allow the realization of parallel operation of a plurality of communications with use of a plurality of data channels allocated to each line of the ISDN.

A general communication terminal apparatus such as a facsimile equipment connected to a public telephone line or a DDX line, can execute only one of voice and image data communications or alternately execute the voice and image data, that is, can perform only so-called half duplex operation.

This is because the above public telephone line or DDX line can basically have a band corresponding only to one-channel information, which results in that, the simultaneous transmission of both the voice and image data leads to data deterioration and transmission rate reduction.

As the ISDN is put to practical use these days, the communication apparatus itself connected to the ISDN has been uniquely developed in the practical use of communication services.

As already known, the ISDN is an integrated digital network which integrally handles such service apparatuses different in contents to be handled as telephone sets, telex equipment and facsimile equipment and which has a plurality of channels for each ISDN line.

An attempt has been made to realize the simultaneous transmission of voice and image data with use of the plural data channels of the ISDN line.

With the communication terminal apparatus connected to the ISDN, however, if a call demanding the reception of image data comes into the apparatus through second one of the plural data channels of the ISDN line, for example, during the reception of image data of the apparatus through first one of the data channels (during operation of an image printer in the apparatus), then the apparatus, in answer to the demand of reception of the new image data, can only send a busy tone back to the party terminal because the image printer is in operation, and thus the call from the party terminal becomes useless.

Further, for example, when the communication terminal apparatus, which is talking with the party through the first data channel of the ISDN line, receives an incoming call demanding a speech, i.e., a voice demanding call through the second data channel; the apparatus, in response to this new speech demand, can only send a busy tone indicative of the busy destination party back to the party terminal a busy tone, thus resulting in that the call from the party terminal becomes useless.

In this way, the prior art communication terminal apparatus has had problems that, when the apparatus receives the new image data demand through the second data channel during execution of the image data through the first data channel and when the apparatus receives the new speech demand through the second data channel during talk through the first data channel, the apparatus cannot execute the new image and speech demands respectively, inevitably involving the reduction of its communication efficiency.

"IEEE Journal on selected areas in Communications" Vol SAC-4 No. 8, November 1986, pages 1188-1192 discloses a terminal which can establish communication with one party over a B-channel and with a second party over the D-channel. The D-channel is slower than the B-channel, so that communication with the second party is unsatisfactory.

"Proceedings of the National Communications Forum" Vol 40 part I, pages 596-604, 1986 discloses that communication with two separate parties can be initiated using 2 B-channels.

The present invention also provides a communication terminal apparatus and its control method which allows the simultaneous realization of a plurality of communications.

It is, accordingly, an object of the present invention to provide a communication terminal apparatus and its control method which, when receiving a new image data demand through a second data channel during execution of image data through a first data channel, can accept the new image demand and can perform different-direction full duplex communication over the image data, thus increasing its communication efficiency.

It is another object of the present invention to provide a communication terminal apparatus and its control method which, when receiving a new incoming voice signal through a second data channel during talk through a first data channel, can execute the new voice signal without sending a busy tone back to the party terminal, with a good communication efficiency.

According to a first aspect of the present invention there is provided a communication teminal apparatus including a plurality of independently operable communication control means and connected to an integrated services digital network through an integrated services digital network line having two data channels, characterised in that said apparatus comprises: a plurality of independently operable network control means for executing call procedures with respect to an outgoing call or an incoming call to or from said integrated services digital network; and network interface means for respectively allocating operations of the plurality of network control means to the two data channels of said integrated services digital network line, means for connecting a first one of the plurality of communication control means with one of the plurality of network control means to communicate with a first party terminal through a first one of the data channels, and leans for connecting another one of the plurality of communication control means with another one of the plurality of network control means to communicate with a second party terminal through the second one of the data channels in response to an incoming call from said second party terminal, when said first one of the plurality of communication control means is in communication with the first party terminal.

Preferred features of the apparatus are set out in claims 2 to 8.

According to a second aspect of the present invention there is provided a method for controlling a communication terminal apparatus connected to an integrated services digital network, the apparatus including a plurality of independently operable communication control means, a plurality of independently operable communication network control means for executing call procedures with respect to an outgoing call or an incoming call to or from an integrated services digital network line having two data channels, and network interface means for allocating operations of the plurality of network control means to the two data channels of said integrated services digital network line, characterised in that: when one of the plurality of communication control means is communicating with a party terminal through a first one of the data channels by means of one of the plurality of network control means and an incoming call from another party terminal, which is different from the first said party terminal, to another one of the plurality of communication control means is received through a second one of the data channels, said network interface means allocates said other one of the plurality of communication control means, which is in an idle state, to said second one of the data channels, and said other one of the plurality of communication control means carries out communication with said other party terminal through said other one of the plurality of network control means.
Fig. 1 is a block diagram showing an embodiment of a communication terminal apparatus in accordance with the present invention;
Fig. 2 is a block diagram of the circuit of a voice main controller in the communication terminal apparatus of Fig. 1;
Fig. 3 is a conceptive diagram for explaining an example of a command used when the communication terminal apparatus of the embodiment is controlled by a host computer as an external connection apparatus;
Figs. 4 to 9 show a flowchart for explaining the processing operation of respective parts of the communication terminal apparatus of the embodiment; and
Fig. 10 is an operational-statue transition diagram showing the processing flows of the communication terminal apparatus of the embodiment.

An embodiment of the present invention will be detailed by referring to accompanying drawings.

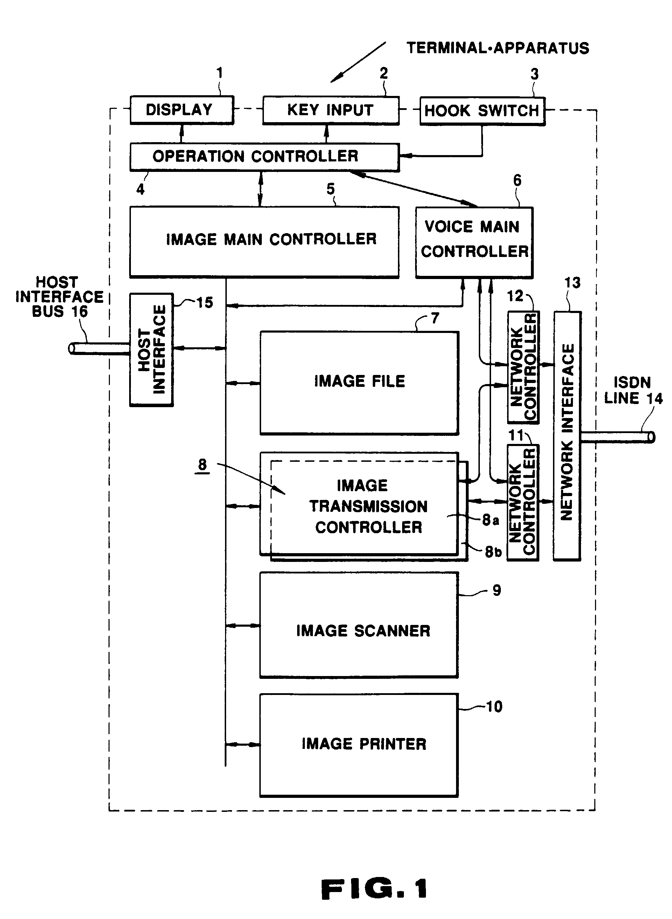

Referring first to Fig. 1, there is shown a block diagram of an embodiment of a communication terminal apparatus in accordance with the present invention.

In the drawing, a display 1 comprises a liquid crystal display and a lamp which are used to indicate operational guidances on incoming and outgoing calls. A key input unit 2 comprises control panel having ten keys through which an operator strokes keys for incoming and outgoing calls to provide a key input to the apparatus. A hook switch 3 is put in an on-hook or off-hook state through the operator's key input operation of the key input unit 2. An operation controller 4 plays a role of operational control according to the input conditions of the key input unit 2 and hook switch 3 provided through operator's operation, that is, a role of man-machine interface. An image main controller 5 is provided to carry out general operational control including the transmission, reception and copy of image communication. A voice main controller 6 is provided to carry out general operational control on voice communication including the control of a speech circuit to realize a speech. An image file 7 comprises such a memory as a disk which allows the simultaneous execution of the write and read operations of the image data. An image transmission controller 8 controls two independent transmissions on image data in accordance with such a facsimile procedure as a G4 or G3 procedure. An image scanner 9 acts to scan and read image data. An image printer 10 converts the image data to a hard copy (printout). Network controllers 11 and 12 execute procedures for incoming/outgoing calls with respect to an ISDN (not shown) line 14 connecting the communication terminal apparatus and the ISDN. A network interface 13 interfaces between the communication terminal apparatus and the ISDN. A host interface 15 interfaces between a not shown host computer and the communication terminal apparatus. A host interface bus 16 includes buses such as GP-IB and LAN connected to this host computer.

The communication terminal apparatus of the present invention of Fig. 1 has the image main controller 5 and voice main controller 6 separately provides as well as the two network controllers 11 and 12 separately provided as associated with the respective operations of the controllers 5 and 6.

With the communication terminal apparatus of the present invention, since the network controllers 11 and 12 are operated independently of each other under the control associated with the network interface 13, the image and voice communications can be simultaneously processed through two data channels of the ISDN line 14.

In the communication terminal apparatus of the present embodiment, the image transmission controller 8 can control two independent transmissions on image communication in accordance with such a transmission procedure (facsimile procedure) as a G4 or G3 procedure. More specifically, the image transmission controller 8 comprises two circuits which have the same function and are independently operated in association with the network controllers 11 and 12, that is, comprises first and second image transmission control circuits 8a and 8b.

With such an arrangement, even when it is desired to carry out two image communications at the same time, the first or second image transmission control circuit 8a or 8b is independently operated depending on the use of the network controller 11 or 12 while the image file 7 performs the write or read operation of the image data, and further the image scanner 9 or the image printer 10 is started as necessary, whereby a so-called different-direction full-duplex operation on image communication can be realized both in a signal transmission mode and in a signal reception mode.

In the present embodiment, the image file 7 is arranged to store therein voice and image data separately.

In the illustrated embodiment, the voice main controller 6, which is connected also with the aforementioned image file 7, comprises, in addition to the control means for the speech circuit, means for decoding a voice data to a format processable at the image file 7 and means for registering voice data corresponding to a prescribed voice message in the image file 7.

With such an arrangement of the communication terminal apparatus of the present embodiment, for example, even when the apparatus receives a new incoming voice signal demanding a speech through a second data channel of the ISDN line 14 during its speech through a first data channel of the line 14, the apparatus does not send a busy tone to the party terminal of demanding the new speech but can cope with it.

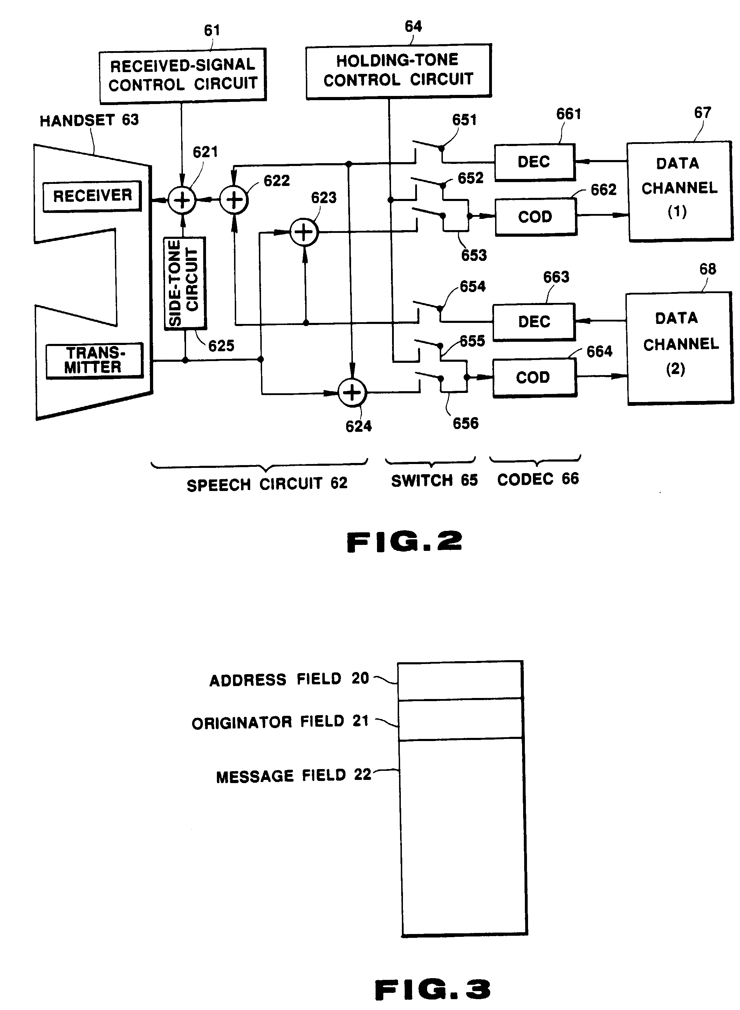

In the present embodiment, the voice controller 6 has such a voice circuitry as shown in Fig. 2. The voice circuitry includes an incoming-signal control circuit 61, a speech circuit 62, a telephone handset 63, a holding-tone control circuit 64, a switch 65, a codec 66, a first data channel 67 and a second data channel 68. The speech circuit has adder circuits 621 to 624 and a side-tone circuit 625.

The switch 65 has contacts 651 to 656, while the codec 66 has decoder circuits 661 and 663 and coder circuit 662 and 664 for the first and second data channels 67 and 68, respectively.

In the communication terminal apparatus of the embodiment having such an arrangement as mentioned above, for example, even when a new voice signal comes into the apparatus through the second data channel 68 of the ISDN line 14 during talk operation of the apparatus through the first data channel 67 of the line 14, the apparatus can cope even with the new speech demand without taking a busy action.

When the terminal apparatus receives an incoming voice signal from the ISDN line 14, the associated dial number is usually informed from the signal originator terminal via the network interface 13 to the present apparatus. To this end, provided in the terminal apparatus of the embodiment is a detection circuit which detects the dial number informed from the signal originator terminal at the time of the reception of the voice signal.

Further, for the purpose of realizing the operation interlinked with the functions of the network controllers 11 and 12, the voice main controller 6 includes a display control circuit which causes the dial number of the signal originator terminal detected by the detection circuit to be indicated on the display under the operation controller.

The respective modules of the communication terminal apparatus of the embodiment including, for example, the image scanner 9 and the image printer 10 are all designed to be operated under control of commands. For this reason, the image main controller 5 can control such a module as the image scanner 9 by sending an associated command to the scanner.

Similarly, the notification of end of the processing operation, for example, to the image scanner 9 can be carried out by sending an associated command from the image scanner 9 to the image main controller 5.

In this way, since the terminal apparatus of the embodiment is made up of the modules which can be operated under control of commands, the operation of the apparatus may also be controlled by means of such an external equipment as a host computer connected via the host interface bus 16 to the host interface 15.

Shown in Fig. 3 is an example of one of commands used in control of the operation of the terminal apparatus of the embodiment, which exemplary command is constituted of an address field 20, a signal-originator field 21 and a message field 22.

With such a command structure, such modules as the image main controller 5, address numbers each not used twice, that is, unique in the terminal apparatus are allocated respectively to the image scanner 9 and the image printer 10, so that a unique address number is placed in the address field 20 of the associated module.

Placed in the message field 22 is such a binary code as means "start" or "end".

The host computer, when actually operating the communication terminal apparatus, first creates a start command having such a format as mentioned above and then transmits this command therefrom through the host interface bus 16 and the host interface 15 to the interior of the terminal apparatus.

The terminal apparatus, when receiving this start command, causes, for example, the image scanner 9 to start its operation under control of the start command, in which case the originator of the start command is not important and the notification of the end of the processing operation is only returned to the originator address of the start command.

For this reason, the host computer can control the communication terminal apparatus of the present embodiment in its various operations by sending various commands to the host interface 15 like the image main controller 5 sends commands.

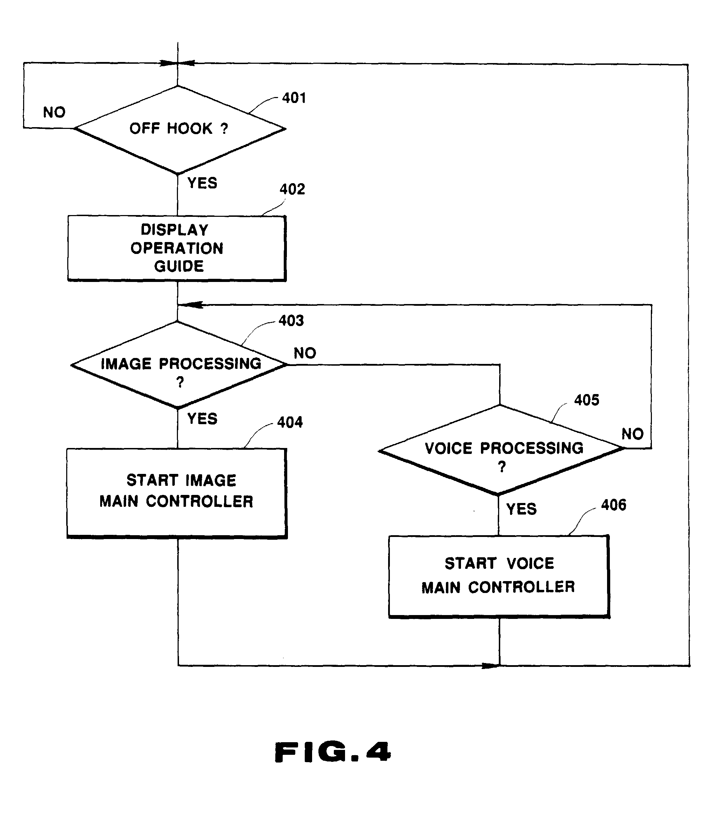

The operation of the communication terminal apparatus will be detailed by referring to a flowchart shown in Figs. 4 to 9.

In the calling mode, the operator first gives a key input necessary for the calling through operator's operation of the key input unit 2 of the terminal apparatus on the calling side, or he or she picks up the telephone handset 63 of the voice controller 6 to put the handset 63 in its off-hook state and to cause the hook switch 3 to detect the off-hook state.

These operational states are informed to the operation controller 4.

The operational controller 4 in turn operates in accordance with a flowchart of Fig. 4. More specifically, the operational controller 4, when detecting the off hook state of the off-hook switch 3 (step 401), causes the display unit 1 indicates on its display screen operational guides including services (image processing and voice processing) to be selected (step 402), prompting the operator to enter an input.

When the operator operates the key input unit 2 in accordance with the operation guidances appearing on the display 1, this cause the selection of the services or the input of calling data relating to the dial number, etc of a destination facsimile equipment to be called.

When the service selected through the operator's key input operation is the image processing (step 403), the operational controller 4 starts the processing operation of the image main controller 5 (step 404).

When the selected service is the voice processing (step 405), the operation controller 4 starts the processing operation of the voice main controller 6 (step 406).

Thereafter, the image main controller 5 and the voice main controller 6 control the main operations of the image and voice processings, that is, individually monitor and execute the start and continuation of the processing, the detection of absence or presence of an abnormality, end, etc.

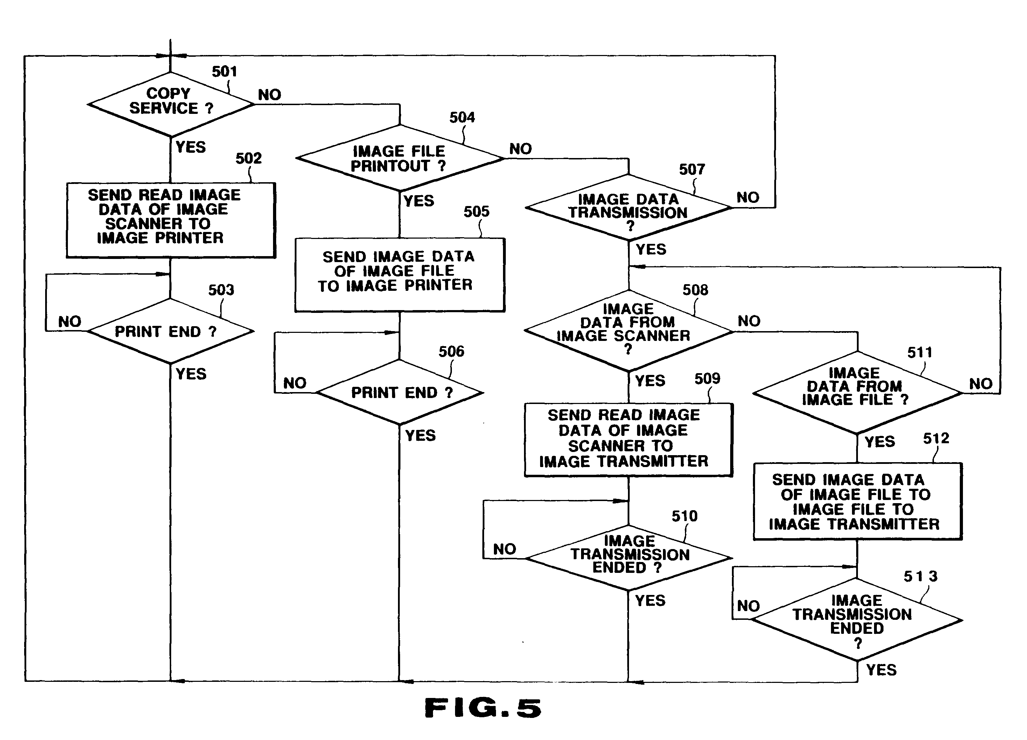

Explanation will first be made as to the processing operation of the image main controller 5. The processing operation of the image main controller 5 is shown in Fig. 5. The image main controller 5 collectively controls the respective operations of the image file 7, image transmission controller 8, image scanner 9 and image printer 10 on the basis of the key input data obtained through the selection operation of various services of the image processing to thereby realize the selected service.

When there is, for example, a copy service demand (step 501), the image main controller 5 issues such a command to the image scanner 9 that causes an image data obtained through the scanning and reading operation of the image scanner 9 to be output to the image printer 10 (step 502), and the image main controller 5 monitors the above processing operation until it receives its processing-end notification from the image scanner 9 (step 503).

When there is a demand of printout of image data already stored in the image file 7 (step 504), the image main controller 5 issues such a command to the image file 7 that causes the image data of the image file to be output to the image printer 10 (step 505), and the controller 5 monitors the above processing operation until it receives its processing-end notification from the image file 7 (step 506).

When there is a request that image data is to be transmitted to a destination communication terminal apparatus to be called (step 507), the image main controller 5 judges whether or not the image data to be transmitted is from the image scanner 9 (step 508). When the image main controller 5 judges that the image data is from the image scanner 9, the controller 5 issues such a command to the imae scanner 9 that causes image data obtained through the scanning and reading operation of the scanner 9 to be output to the image transmission controller 8 (image transmission control circuit 8a or 8b) (step 509) ; and the controller 5 monitors the above processing operation until it receives its processing-end notification from the image scanner 9 (step 510).

If the image data to be transmitted is from the image file 7 (step 511), then the image main controller 5 issues such a command to the image file 7 that causes the stored image data to be output to the image transmission controller 8 (image transmission control circuit 8a or 8b) (step 512), and the controller 5 monitors its processing operation until it receives its processing-end notification from the image scanner 9 (step 513).

The image transmission controller 8 also informs the calling request to the network conroller 11 or 12 associated with the image transmission control circuit 8a or 8b under control of the image main controller 5.

In response to this request, for example, the network controller 11 or 12 executes the calling procedure of the image transmission through the network interface 13.

In this calling procedure, idle one of the plurality of data channels of the ISDN line 14 is seized so that the image data transmitted from the image scanner 9 or the image file 7 to the image transmission controller 8 (image transmission control circuit 8a or 8b) is transferred to the destination terminal apparatus to be called. Explanation will next be made as to the processing operation of the voice main controller 6.

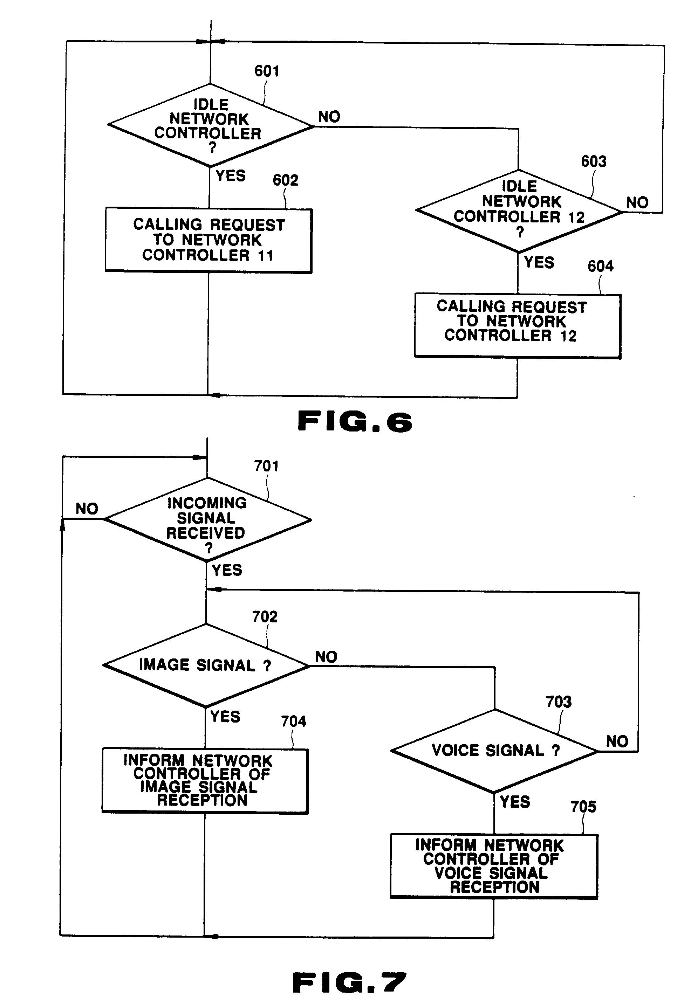

The processing operation of the voice main controller 6 is shown by a flowchart of Fig. 6. More in detail, the voice main controller 6 informs the network controller 12 or 11 of a calling request on the basis of the previously-mentioned key input data obtained through the operator's selection operation of the key input unit 2 on the voice processing service. That is voice main controller 6 first judges whether or not the network controller 11 is idle (step 601). If the network controller 11 is idle, then the main controller 6 selects the idle controller 11 and issues a calling request to the controller 11 (step 602). The voice main controller 6, after determining in the step 601 that the network controller 11 is being used, next judges whether or not the network controller 12 is idle (step 603). If idle, then the controller 6 selects the network controller 12 and issues a calling request to the controller 12 (step 604).

In answer to this request, if for example, the network controller 12 is selected, the controller 12 executes the calling procedure relating to the voice transmission through the network interface 13.

After idle one of the data channels of the ISDN line 14 is seized based on the calling procedure, the voice main controller 6 controls its speech circuit and so on, whereby a speech is realized between the present terminal apparatus and the destination terminal apparatus to be called through the idle data channel.

The operation of the communication terminal apparatus of the present embodiment in the signal-receiving mode will next be explained. The processing operation of the network interface 13 in the signal receiving mode is shown by a flowchart of Fig. 7. More specifically, when the network interface 13 receives an incoming signal from the ISDN line (step 701), it judges whether the incoming signal is an image signal or a voice signal (steps 702 and 703) and informs the network controller 11 or 12 of the judgement result (steps 704 and 705).

In the case where the incoming signal is an image signal and the reception of the image signal is informed to, for example, the network controller 11, the network controller 11 informs the related image transmission control circuit 8a in the image transmission controller 8 of the signal reception.

The image transmission controller 8 also informs the image main controller 5 of the signal reception and then sends the image data of the received signal to the image file 7 or the image printer 10.

As a result, the image file 7 or the image printer 10 will store or print out the image data under control of the image main conroller 5.

Prior to the above operation, the image main controller 5 issues a command to the opeation controller 4 to cause the display 1 to indicate thereon "a display prompting the operator to answer to the image signal reception", and thereafter the controller 5 monitors its processing operation until it receives its processing-end notification from the image transmission controller 8.

When the incoming signal is a voice signal and the reception of the voice signal is informed to the network controller 12, the controller 12 informs the voice main controller 6 of the reception of the voice signal.

As a result, the voice main controller 6 controls its speech circuit and so on to thereby perform a speech with the calling party.

Prior to this operation, the voice main controller 6 issues such a command to the operation controller 4 that causes the display unit 1 to indicate thereon "a display prompting the operator to answer to the voice signal reception", and thereafter the controller 6 monitors its processing operation until the speech is completed.

In this way, with the communication terminal apparatus in accordance with the present invention, the network controllers 11 and 12, which are provided so as to associated with the respective operations of the image main controller 5 and the voice main controller 6, are operated independently under the control associated with the network interface 13, thereby enabling the simultaneous processing of the image and voice communications with use of two idle data channels of the ISDN line 14.

Explanation will next be made as to the case where, while talking through the first data channel of the ISDN line 14, the terminal apparatus receives an incoming speech request signal through the second data channel.

In this case, the network interface 13 judges the incoming signal is a voice signal and the effect is informed from the network interface 13 to the voice main controller 6, for example, through netwrok controller 12 operable as associated with the second data channel.

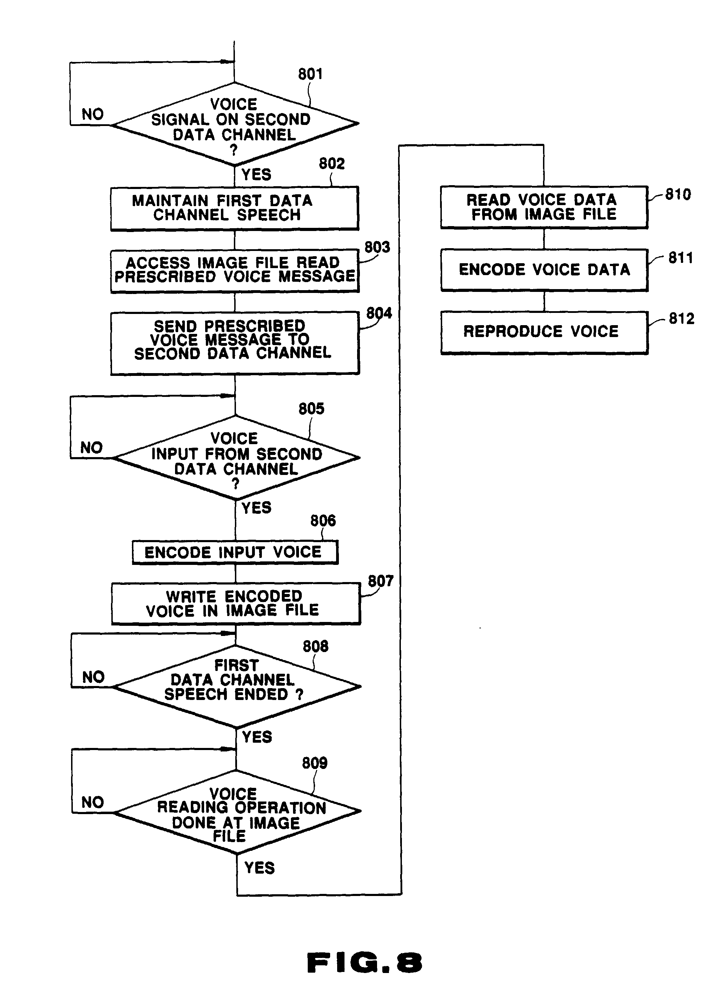

The operation of the voice main controller 6 in the above case is shown by a flowchart of Fig. 8. The voice main controller 6, when receiving a speech request notification through the second speech channel during speech through the first data channel (step 801), while maintaining the speech through the first data channel (step 802), makes access to the image file 7 to read a prescribed voice message therefrom (step 803), and further transmits the read voice message to the party terminal apparatus which has issued the speech request, through the network controller 12, network interface 13 and second data channel (step 804).

This voice message is previously written in the image file 7 by aforementioned registering means.

Thereafter, A voice data transmitted from the party terminal in response to the voice message is received at the reception-side terminal apparatus through the second data channel and then applied to the voice main controller 6 therein by the opposite route to the above.

The voice main controller 6, when applied with the above voice data (step 805), encodes the voice data into a signal having a format processable at the image file 7 (step 806), and transfers the encoded data to the image file 7 to write it in a memory zone therein (step 807).

Subsequently, the voice main controller 6, which is monitoring whether or not the speech on the first data channel is completed (step 808), when detecting the end of the speech, judges whether or not the reading operation of the above voice data already written in the image file 7 has been provided (step 809). When the voice main controller 6 determines that the reading operation of the voice data has been provided, controller 6 starts reading the voice data so far stored in the image file 7 therefrom (step 810).

The voice main controller 6 then decodes the voice data read out from the image file 7 into a signal having a format adaptable for the speech circuit (step 811), and reproduces the decoded signal through the handset or the like (step 812).

The present communication terminal apparatus based on the aforementioned control, when receiving a speech request from a party terminal during the speech operation, cannot take its busy operation but can reliably give the operator the message sent from the party terminal.

The above control is designed so that the voice data received from the party terminal can be stored in the image file 7 as it is in the same format as when the voice data is transmitted on the data channel, for example, in the format of a transmission rate of 64Kbps, there can be eliminated the need for provision of such special means for encoding the voice data into a signal having a format storable in the image file 7.

With the communication terminal apparatus of the present embodiment, when there is provided in the apparatus such a mode that, even in cases other than when there are two voice communication requests at the same time as mentioned above, the voice data of the recieved signals can be stored in the image file 7, the setting of this mode as necessary also enables the addition of a so-called automatic answering telephone function in the absence of the operator.

Description will then be made as to another example of the control of the terminal apparatus when receiving a new voice signal through the second data channel 68 of the ISDN line 14 during speech through the first data channel 67 of the line 14. In such a condition, the network interface 13 judges the presence of the incoming new voice signal and informs of the effect, for example, the network controller 12 operable as associated with the second data channel 68.

The network controller 12 in turn detects a notification indicative of the presence of this voice signal reception as well as the dial number of the call originator terminal from the network interface 13, and then applies them to the voice main controller 6.

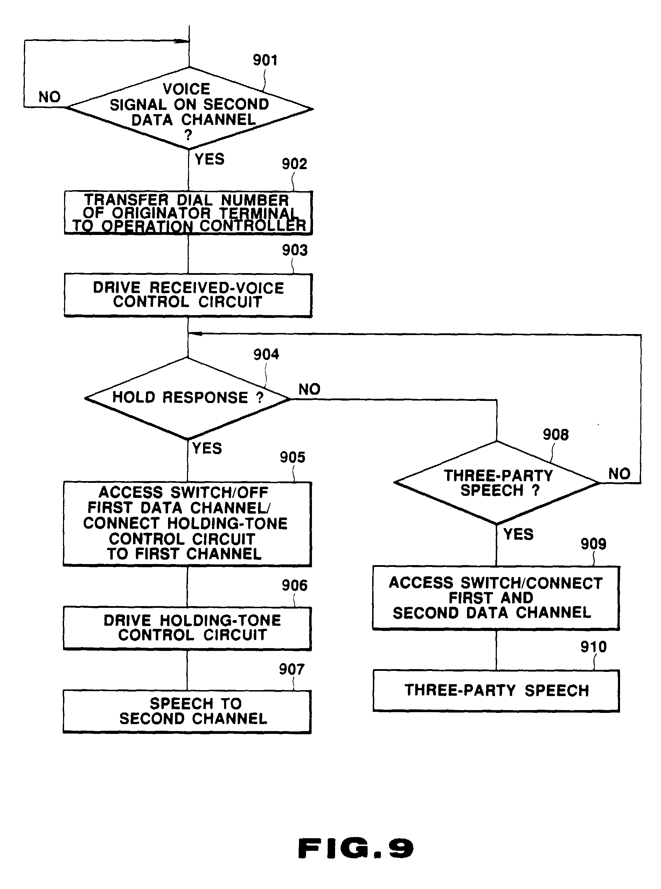

The operation of the voice main controller 6 under the above condition is given by a flowchart of Fig. 9. The voice main controller 6, when receiving the voice-signal reception notification and the dial number of the originator terminal (step 901), transfers the dial number of the originator terminal also to the operation controller 4 (step 902) which in turn controls the display unit 1 to indicate thereon the dial number.

The voice main controller 6, as soon as the detection circuit of the network controller 12 detects the dial number of the originator terminal, starts the received-signal control circuit 61 (step 903) and superimposes the signal reception tone on the receiver system of the telephone handset 63 through the adder circuit 621. This enables the operation talking with the party to recognize the generation of the new received voice signal by the signal reception tone emitted from the receiver of the handset 63. In addition, the operator can know the then originator terminal by looking at the dial number indicated on the display 1 based on the above control.

Thereafter, if the operator wishes to answer to the speech request from the originator terminal, he can show his intention by giving a hooking action to the hook switch 3.

Through this hooking action, operator's intention of answering to the speech request is informed to the voice main controller 6 through the operation controller 4.

The voice main controller 6, when receiving the answer intention notification (step 904), quickly makes access to the switch 65 in which the contacts 651 and 653 are switched from their ON state to the OFF state on the side of the first data channel 67 while the contacts 654 and 656 are switched from their OFF state to the ON state on the side of the second data channel 68 (step 905).

As a result, the first data channel 67 is put in the interconnection cut-off state from the speech circuit 62.

Under such a condition, the voice main controller 6 switches the contact 652 from its OFF state to the ON state and at the same time, starts the holding-tone control circuit 64 (step 906) to transmit a holding tone via the encoder circuit 662 to the first data channel 67.

Thereafter, the first data channel 67 is kept in its hold state until it receives a release order, for example, issued through operator's re-hooking action.

The second data channel 68, on the other hand, is newly connected to the speech circuit 62 under the above switching control (step 905) to be thereby put in its speech state (step 908).

In this speech state of the second data channel 68, the voice data of the originator terminal coming from the second channel 68 is decoded at the decoder circuit 663 and then sent via the contact 654 and the adders 622 and 621 to the receiver of the handset 63 to be reproduced therein.

On the contrary, a voice signal issued from the transmitter of the handset 63 is sent via the adder 624 and contact 656 to the encoder 664 to be encoded therein, and then transmitted through the second data channel 68 to the originator terminal.

Under such a conditon that the first data channel 67 is in the hold state and the operator is talking with the party through the second data channel 68, if the speech is completed or the operator again gives a data-channel switching instruction, then the reverse switching control to the above over the contacts 651, 653, 654 and 656 under the voice main controller 6 causes the termination of the speech through the second data channel 68 and instead the restart of the speech through the first data channel 67.

At this time, the contact 652 is witched from the ON state to the OFF state and at the same time, the transmission of the holding tone from the holding-tone control circuit 64 is stopped.

Further, when it is desired to put the speech of the second data channel 68 in the hold state, the contact 655 is switched from the OFF state to the ON state so that the holding-tone control circuit 64 transmits a holding tone via the contact 655 to the second data channel 68.

The ordinary hold answering operation between two parties has been explained in the foregoing.

The communication terminal apparatus of such an arrangement as mentioned above in accordance with the present invention can also realize a three-party speech which follows.

In the three-party speech mode, the operator, unlike the aforementioned hold answering operation, issues an instruction demanding the three-party speech, for example, through predetermined key operation of the key input unit 2.

Assume now that, when the first data channel 67 is in the speech state and the second data channel 68 is in the hold state, the operator issued the three-party speech instruction.

The operator's key operation is informed from the key input unit 2 via the operation controller 4 to the voice main controller 6.

The voice main controller 6, when receiving this instruction from the key input unit 2 (step 908), maintains the contacts 651 and 653 in the ON state and switches the contacts 654 and 656 to the ON state.

This results in that the first and second data channels 67 and 68 are both connected through the codec 66 to the speech circuit 62 (step 909).

Under such a condition, in the receiver circuit system of the handset 63, voice data respectively coming from the first and second data channels 67 and 68 are decoded at the decoders 661 and 663, sent through the contacts 651 and 654 to the adder 622, added together at the adder 622, and then reproduced at the receiver of the handset 63 through the adder 621.

In the circuit system of the transmitter of the handset 63, on the other hand, a voice signal from the transmitter is added at the adders 623 and 624 to received-speech signals sent from the second and first data channels 68 and 67, sent through the contacts 653 and 656 to the encoders 662 and 664, encoded at the encoders 662 and 664, and then transmitted to the party terminal through the first and second data channels 67 and 68, respectively.

The adders 621 and 624 function to add the voices of the three parties together and set the added signal at a proper level.

At the same time, the side-tone circuit 625 functions to add a proper level of side tone to the adder 621 and to adjust the signal levels at the transmitter and receiver of the handset 63.

As a result, the communication terminal apparatus of the present invention can realize three-party communications in which each party is listening to the two other party voices at suitable level (step 910).

The above explanation has been made as to the examples of the operational control of the two and three-party communications when the terminal apparatus receives new incoming voice signal or signals during talk on the first data channel 67, but even when the present terminal apparatus receives new incoming voice signal or signals during talk on the second data channel 68, the present apparatus can cope with it based on the similar operational control.

Further, the present embodiment can process two image communications at the same time. Such simultaneous processing of two image communications of the communication terminal apparatus will be considered in the following in connection with its typical example.

For example, while the image scanner 9 is operated and an image data is being transmitted through the first data channel, if it is additionally desired to receive an image data through the second data channel, then the image main controller 5 controls the image printer 10 or the image file 7 so that the image data from the party terminal can be recorded by the image printer 10 or can be written in the image file 7.

Further, while the terminal apparatus transmits image data already written in the image file 7 through the first data channel, if it is additionally desired for the apparatus to also receive an image data from the second data channel, the image main controller 5 controls the image printer 10 or the image file 7 so that the image data from the party terminal can be recorded by the image printer 10 or can be written in the image file 7.

On the contrary, while the image printer 10 is operated and an image data is being received from the first data channel, if it is further desired to a new image data from the second data channel, the image main controller 5 controls the image file 7 so that the new image data from the party terminal can be written in the image file 7.

While an image data is being received from the first data channel during the write operation to the image file 7, if it is further desired for the apparatus to receive a new image data from the second data channel, then the image main controller 5 controls the image printer 10 so that the new image data from the party terminal can be recorded by the image printer 10.

While the image printer 10 is operated and an image data is being received from the first data channel, if it is additionally desired for the apparatus to transmit another image data through the second data channel, the image main controller 5 controls the image scanner 9 or the image file 7 so that the image data can be read by the image scanner 9 and directly transmitted to the party terminal or can be written in the image file 7.

Application of such control enables the communication terminal apparatus of the present invention to realize different-direction full-duplex operation for the above image communications, for example, even when the apparatus issues a new image-communication request through operator's image-processing key operation of the key input unit 2 during communication of an image data on the first data channel.

In this case, after generation of the above image-communication request, the image main controller 5, as required, starts the image scanner 9 to read the image data thereby or previously writes the image data in the image file 7 to transmit it to the party terminal through the second data channel.

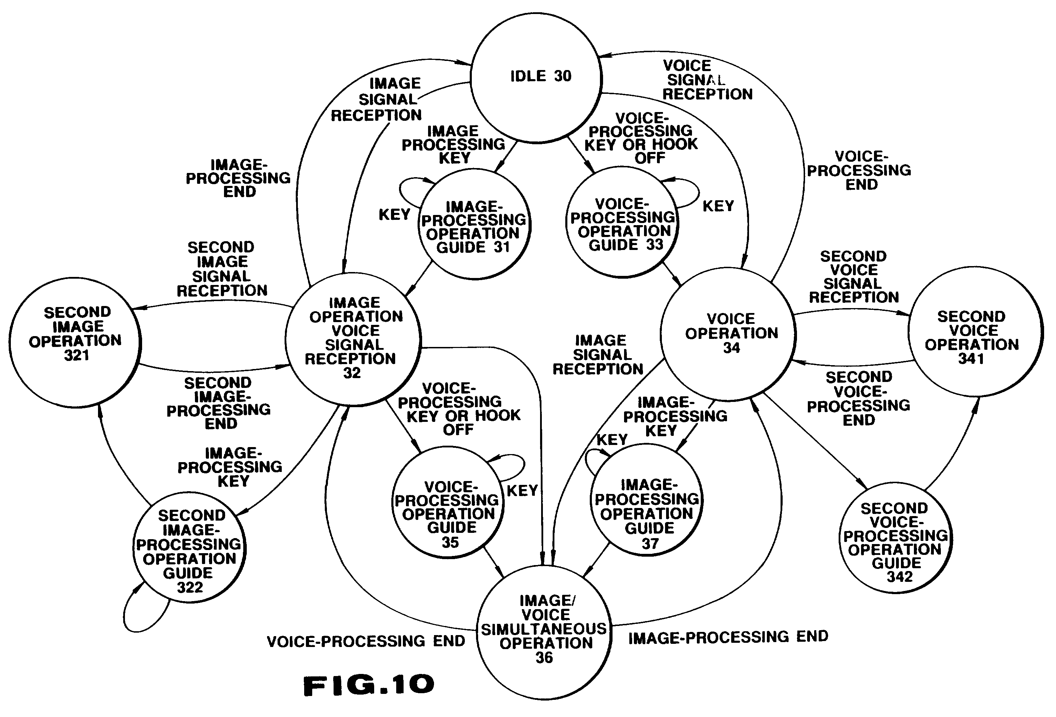

The general operational flow of the communication terminal apparatus of the present embodiment based on the foregoing arrangement and control is shown by a operational-state transition diagram of Fig. 10.

In Fig. 10, reference numeral 30 denotes an idle state. Similarly, numeral 32 denotes an image operation state, 34 a voice operation state, 36 an image/voice simultaneous operation state, 31 and 37 each an image-processing operation guide state, 33 and 35 each a voice-processing operation guide state.

In the idle state 30, the communication terminal apparatus performs no operation.

When the operator conducts the key input operation of image processing keys (such as keys indicative of the dial number of a party communication terminal apparatus) of the keyboard (key input unit 2) for example, the present terminal apparatus is shifted to the image-processing operation guide 31 for selection of the image processing services.

Thereafter, operator's section of one of the image processing services through operation of the image-processing guide causes the terminal apparatus to be shifted to the image operation state 32.

In this state 32, the completion of the image processing causes the facsimile apparatus to be returned to the idle state 30.

In the idle state 30, on the other hand, if the operator gives a voice-processing key input or an off-hook action, then the terminal apparatus is shifted to the voice-processing operation guide 33.

In the state 33, when the operator finishes his key input operation necessary for the speech based on the displayed operational guide, the terminal apparatus is shifted to the voice operation state 34.

The terminal apparatus, when receiving an incoming voice signal in the idle state 30, is also shifted directly to the voice operation state 34.

In the image operation state 32, if the terminal apparatus generates a voice operation request, then the apparatus, while continuing the image operation, is changed from the state 32 through the voice-processing operation guide state 35 to the image/voice simultaneous operation state 36.

In the image operation state 32, if the apparatus receives an incoming voice signal, then it is shifted directly to the image/voice simultaneous operation state 36 without being once changed to the state 35.

In the voice operation state 34, operator's key input operation of the image-processing keys causes the terminal apparatus to be shifted from the voice operation state 34 through the image-processing operation guide state 37 to the image/voice simultaneous operation state 36, while continuing the voice operation.

In the voice operation state 34, if the apparatus receives an incoming image signal on the other hand, the apparatus is changed directly to the image/voice simultaneous operation state 36 without being once changed to the state 37.

In the image/voice simultaneous operation state 36, the completion of the voice processing causes the terminal apparatus to be shifted to the image operation state 32 while the completion of the image processing causest apparatus to be shifted to the voice operation state 34.

The terminal apparatus of the present embodiment, when receiving a second incoming voice signal in the voice operation mode 34, is shifted directly to a second-voice operation state 341.

In this mode 341, the apparatus maintains the first speech and carries out its answering operation to a second speech (two-party or three-party speech) under control of the voice main controller 6 in the same manner as in the foregoing.

And the completion of the answering operation to the second-voice signal reception causes the terminal apparatus to be returned to the voice operation state 34.

In the state 34, if the terminal apparatus generates a second-voice operation request through operator's predetermined key operation, the apparatus is shifted from the state 34 through a second-voice-processing operation guide state 342 to the second-voice operation state 341, continuing the so far voice operation.

The terminal apparatus of the present embodiment, when receiving a second incoming image signal in the image operation state 32, is shifted directly to a second-image operation state 321.

In this state 321, the apparatus answers its answering operation to the second image signal reception while maintaining the first image operation under control of the image main controller 5.

And the completion of the second image processing causes the terminal apparatus to be returned to the image operation state 32.

In the image operation state 32, if the terminal apparatus generates a new image operation request through operator's image-processing key operation, then the apparatus is shifted from the state 32 through a second-image processing operation guide state 322 to the second-image operation state 321, while continuing the so far image operation.

In this way, in accordance with the present embodiment, the communication terminal apparatus comprises two independently operable network controllers, a network interface for allocating operations of these network controllers to two data channels of a single ISDN line, an image transmission controller for independently executing two facsimile procedures, and an image file capable of executing write and read operations at the same time. As a result, not only the present terminal apparatus can realize the voice and image communications at the same time but it also can answer even to a new image communication request generated during its image communication, thereby realizing a good communication efficiency based on the different-direction full-duplex operation.

According to the present embodiment, the communication terminal apparatus also comprises independently operable two network controllers, a network interface for allocating operations of these network controllers to two data channels of a single ISDN line, and a voice main controller for controlling a speech circuit to allow a two-party or three-party communication when receiving a notification indicative of the reception of an incoming voice signal from second one of the two data channels of the ISDN line during talk on first one of the two channels. As a result, the present terminal apparatus can achieve the voice and image communications at the same time and also can cope with the reception of an incoming new voice signal during talk without taking its busy operation to the incoming signal, the unwanted refusal of such a speech request can be avoided and thus efficient communication can be realized.

## Claims

1. A communication terminal apparatus including a plurality of independently operable communication control means (6,8) and connected to an integrated services digital network through an integrated services digital network line (14) having two data channels, characterised in that said apparatus comprises:
a plurality of independently operable network control means (11, 12) for executing call procedures with respect to an outgoing call or an incoming call to or from said integrated services digital network; and
network interface means (13) for respectively allocating operations of the plurality of network control means (11, 12) to the two data channels of said integrated services digital network line (14),
means (4,13) for connecting a first one of the plurality of communication control means (6, 8) with one of the plurality of network control means (6, 8) to communicate with a first party terminal through a first one of the data channels,
means (4,13) for connecting another one of the plurality of communication control means (6, 8) with another one of the plurality of network control means (14, 12) to communicate with a second party terminal through the other second one of the data channels in response to an incoming call from said second party terminal, when said first one of the plurality of communication control means (6, 8) is in communication with the first party terminal.

2. The communication terminal apparatus as set forth in claim 1, characterised in that the plurality of communication control means (6, 8) comprises:
voice control means (6) connected to said one of the plurality of network control means (14, 12) for executing input/output processing of a voice signal transmitted or received through one of the plurality of network control means (11, 12);
image transmission control means (8) connected to another one of the plurality of network control means (11, 12), for executing transmission control of image data transmitted or received through said other one of the plurality of network control means (11, 12); and
image control means (5) for executing input/output processing of the image data controlled by said image transmission control means (8).

3. The communication terminal apparatus as set forth in claim 1, characterised in that the plurality of communication control means (6, 8) comprises:
first image transmission control means (8a) connected to one of the plurality of network control means (12), for executing transmission control of image data transmitted or received through said one of the plurality of network control means;
second image transmission control means (8b) connected to another one of the plurality of network control means (11), for executing transmission control of image data transmitted or received through said other one of the plurality of network control means (11); and
image control means (5) for executing input/output processing of the image data controlled by said first and second image transmission control means (8a, 8b).

4. The communication terminal apparatus as set forth in claim 1, characterised in that the plurality of communication control means comprises:
voice control means (6) connected to the plurality of network control means (11, 12), for executing input/output processing of a voice signal transmitted or received through the plurality of network control means (11, 12);
voice input/output means (63) for inputting/outputting the voice signal transmitted or received through one of the plurality of network control means; and
memory means (7) for storing the voice signal received through another one of the plurality of network control means (11, 12) and for reading out the voice signal transmitted through said network control means (11, 12).

5. The communication terminal apparatus as set forth in claim 1, characterised in that the plurality of communication control means comprises:
voice control means (6) connected to the plurality of network control means (11, 12), for executing input/output processing of a voice signal transmitted or received through the plurality of network control means (11, 12); and
voice input/output means (53) for inputting/outputting the voice signal transmitted or received through said network control means;
said voice control means (6) comprising
incoming signal tone control means (61), for superposing an incoming call tone on a first voice communication using one of said network control means (11, 12), when an incoming call requesting a second voice communication is detected; and
means (65) for switching from the first voice communication to the second voice communication.

6. The communication terminal apparatus as set forth in claim 5, characterised in that said voice control means (6) comprises holding-tone control means (64) for transmitting a holding tone to the party of the first voice communication when the first voice communication is switched to the second voice communication.

7. The communication terminal apparatus as set forth in claim 1, characterised in that the plurality of communication control means (6, 8) comprises:
voice control means (6) connected to the plurality of network control means (11, 12), for executing input/output processing of a voice signal transmitted or received through the plurality of network control means (11, 12); and
voice input/output means (63) for inputting/outputting the voice signal transmitted or received through said network control means (11, 12);
said voice control means (6) comprising switch means (65) for outputting a voice signal inputted from the voice input means (63) to the plurality of network control means (11, 12), superposing the voice signal on a voice signal outputted from the plurality of network control means (11, 12) and outputting the superposed voice signal to said voice output means (63).

8. The communication terminal apparatus as set forth in claim 1, further comprising:
display means (1) for displaying an operation guidance when a call is originated;
key input means (2) for selecting a desired processing in accordance with the operation guidance displayed by said display means (1) and inputting data necessary for the selected processing;
operation control means (4) for controlling operations of said key input means (2) and said display means (1);
voice main control means (6) driven when the processing selected by said key input means (2) is a processing with respect to a voice communication, for controlling the operation with respect to the voice communication; and
image main control means (8) driven when the processing selected by said key input means (2) is a processing with respect to an image communication, for controlling the operation with respect to the voice communication.

9. A method for controlling a communication terminal apparatus connected to an integrated services digital network, the apparatus including a plurality of independently operable communication control means (6, 8), a plurality of independently operable communication network control means (11, 12) for executing call procedures with respect to an outgoing call or an incoming call to or from an integrated services digital network line (14) having two data channels, and network interface means (13) for allocating operations of the plurality of network control means (11, 12) to the two data channels of said integrated services digital network line (14), characterised in that:
when one of the plurality of communication control means (6, 8) is communicating with a party terminal through a first one of the data channels by means of one of the plurality of network control means (11, 12) and an incoming call from another party terminal, which is different from the first said party terminal, to another one of the plurality of communication control means (6, 8) is received through a second one of the data channels, said network interface means (13) allocates said other one of the plurality of communication control means (6, 8), which is in an idle state, to said second one of the data channels, and said other one of the plurality of communication control means (6, 8) carries out communication with said other party terminal through said other one of the plurality of network control means (11, 12).

10. The method as set forth in claim 9, characterised in that, when one of the plurality of communication control means (6, 8) is communicating with a party terminal through one of the two data channels by means of one of the plurality of network control means (11, 12), and a call originates from another one of the plurality of communication control means (6, 8) to another party terminal, said network interface means (13) allocates the other one of the two data channels to another one of the plurality of network control means (12, 13) which is in an idle state, and said other one of the plurality of communication control means (6, 8) carries out communication with said other party terminal through said other one of the plurality of network control means (11, 12).

## Patentansprüche

1. Kommunikationsendgerät, das eine Vielzahl von unabhängig betriebsfähigen Kommunikationssteuereinrichtungen (6, 8) aufweist und mit einem diensteintegrierenden Digitalnetz über eine diensteintegrierende Digitalnetz-Leitung (14) mit zwei Datenkanälen angeschlossen ist, dadurch gekennzeichnet, daß das Gerät aufweist:
eine Vielzahl von unabhängig betriebsfähigen Netzsteuereinrichtungen (11, 12) zum Ausführen von Rufvorgängen bezüglich eines abgehenden Rufs oder eines ankommenden Rufs zum oder vom diensteintegrierenden Digitalnetz; und
eine Netzschnittstelleneinrichtung (13) für jeweilige Zuweisungsvorgänge der Vielzahl von Netzsteuereinrichtungen (11, 12) an die beiden Datenkanäle der Diensteintegrierenden Digitalnetz-Leitung (14),
Einrichtungen (4, 13) zum Verbinden einer ersten aus der Vielzahl von Kommunikationssteuereinrichtungen (6, 8) mit einer aus der Vielzahl von Netzsteuereinrichtungen (11, 12), um mit einem ersten Teilnehmerendgerät über einen ersten der Datenkanäle zu kommunizieren, und Einrichtungen (4, 13) zum Verbinden einer anderen aus der Vielzahl von Kommunikationssteuereinrichtungen (6, 8) mit einer anderen aus der Vielzahl von Netzsteuereinrichtungen (11, 12) als Antwort auf einen ankommenden Ruf von dem zweiten Teilnehmerendgerät, wenn die erste aus der Vielzahl von Kommunikationssteuereinrichtungen (6, 8) mit dem ersten Teilnehmerendgerät kommuniziert, um mit einem zweiten Teilnehmerendgerät über den zweiten der Datenkanäle zu kommunizieren.

2. Kommunikationsendgerät nach Anspruch 1, dadurch gekennzeichnet, daß die Vielzahl von Kommunikationssteuereinrichtungen (6, 8) aufweist:
eine Sprachsteuereinrichtung (6), die mit der einen aus der Vielzahl von Netzsteuereinrichtungen (11, 12) verbunden ist, zum Ausführen der Eingabe-/Ausgabe-Verarbeitung eines über eine aus der Vielzahl von Netzsteuereinrichtungen (11, 12) übertragenen oder empfangenen Sprachsignals;
eine Bildübertragungs-Steuereinrichtung (8), die mit einer anderen aus der Vielzahl von Netzsteuereinrichtungen (11, 12) verbunden ist zum Ausführen der Übertragungssteuerung von über die andere aus der Vielzahl von Netzsteuereinrichtungen (11, 12) übertragenen oder empfangenen Bilddaten; und
eine Bildsteuereinrichtung (5) zum Ausführen der Eingabe-/Ausgabe-Verarbeitung der von der Bildübertragungs-Steuereinrichtung (8) gesteuerten Bilddaten.

3. Kommunikationsendgerät nach Anspruch 1, dadurch gekennzeichnet, daß die Vielzahl von Kommunikationssteuereinrichtungen (6, 8) aufweist:
eine erste Bildübertragungs-Steuereinrichtung (8a), die mit einer aus der Vielzahl von Netzsteuereinrichtungen (12) verbunden ist, zum Ausführen der Übertragungssteuerung von über die eine aus der Vielzahl von Netzsteuereinrichtungen übertragenen oder empfangenen Bilddaten;
eine zweite Bildübertragungs-Steuereinrichtung (8b), die mit einer anderen aus der Vielzahl von Netzsteuereinrichtungen (11) verbunden ist, zum Ausführen der Übertragungssteuerung von über die andere aus der Vielzahl von Netzsteuereinrichtungen (11) übertragenen oder empfangenen Bilddaten; und
eine Bildsteuereinrichtung (5) zum Ausführen der Eingabe-/Ausgabe-Verarbeitung der von der ersten und der zweiten Bildübertragungs-Steuereinrichtung (8a, 8b) gesteuerten Bilddaten.

4. Kommunikationsendgerät nach Anspruch 1, dadurch gekennzeichnet, daß die Vielzahl von Kommunikationssteuereinrichtungen aufweist:
eine Sprachsteuereinrichtung (6), die mit der Vielzahl von Netzsteuereinrichtungen (11, 12) verbunden ist. zum Ausführen der Eingabe/Ausgabe-Verarbeitung eines über die Vielzahl von Netzsteuereinrichtungen (11, 12) übertragenen oder empfangenen Sprachsignals;
eine Sprach-Eingabe-/Ausgabe-Einrichtung (63) zum Eingeben/Ausgeben des über eine aus der Vielzahl von Netzsteuereinrichtungen übertragenen oder empfangenen Sprachsignals; und
eine Speichereinrichtung (7) zum Speichern des über eine andere aus der Vielzahl von Netzsteuereinrichtungen (11, 12) empfangenen Sprachsignals und zum Lesen des über die Netzsteuereinrichtungen (11, 12) übertragenen Sprachsignals.

5. Kommunikationsendgerät nach Anspruch 1, dadurch gekennzeichnet, daß die Vielzahl von Kommunikationssteuereinrichtungen aufweist:
eine Sprachsteuereinrichtung (6), die mit der Vielzahl von Netzsteuereinrichtungen (11, 12) verbunden ist, zum Ausführen der Eingabe/Ausgabe-Verarbeitung eines über die Vielzahl von Netzsteuereinrichtungen (11, 12) übertragenen oder empfangenen Sprachsignals; und
eine Sprach-Eingabe-/Ausgabe-Einrichtung (63) zum Eingeben/Ausgeben des über die Netzsteuereinrichtungen übertragenen oder empfangenen Sprachsignals;
wobei die Sprachsteuereinrichtung (6) aufweist:
eine Anrufsignalton-Steuereinrichtung (61) zum Überlagern einer ersten Sprachkommunikation mit einem ankommenden Rufton unter Verwendung einer der Netzsteuereinrichtungen (11, 12), wenn ein ankommender Ruf, der zu einer zweiten Sprachkommunikation auffordert, ermittelt wird; und
eine Einrichtung (65) zum Umschalten von der ersten Sprachkommunikation auf die zweite Sprachkommunikation.

6. Kommunikationsendgerät nach Anspruch 5, dadurch gekennzeichnet, daß die Sprachsteuereinrichtung (6) eine Besetzthalteton-Steuereinrichtung (64) aufweist zum Übertragen eines Besetzthaltetons an den Teilnehmer der ersten Sprachkommunikation, wenn die erste Sprachkommunikation zur zweiten Sprachkommunikation umgeschaltet wird.

7. Kommunikationsendgerät nach Anspruch 1, dadurch gekennzeichnet, daß die Vielzahl von Kommunikationssteuereinrichtungen (6, 8) aufweist:
eine Sprachsteuereinrichtung (6), die mit der Vielzahl von Netzsteuereinrichtungen (11, 12) verbunden ist, zum Ausführen der Eingabe/Ausgabe-Verarbeitung eines über die Vielzahl von Netzsteuereinrichtungen (11, 12) übertragenen oder empfangenen Sprachsignals; und
eine Sprach-Eingabe-/Ausgabe-Einrichtung (63) zum Eingeben/Ausgeben des über die Netzsteuereinrichtungen (11, 12) übertragenen oder empfangenen Sprachsignals;
wobei die Sprachsteuereinrichtung (6) aufweist: eine Schaltereinrichtung (65) zum Ausgeben eines von der Spracheingabeeinrichtung (63) eingegebenen Sprachsignals an die Vielzahl von Netzsteuereinrichtungen (11, 12), Überlagern eines von der Vielzahl von Netzsteuereinrichtungen (11, 12) ausgegebenen Sprachsignals mit dem Sprachsignal und Ausgeben des überlagerten Sprachsignals an die Sprachausgabeeinrichtung (63).

8. Kommunikationsendgerät nach Anspruch 1, das ferner aufweist:
eine Anzeigeeinrichtung (1) zum Anzeigen einer Bedienungsanweisung, wenn ein Ruf ausgelöst wird;
eine Tasteneingabeeinrichtung (2) zum Wählen einer gewünschten Verarbeitung entsprechend der von der Anzeigeeinrichtung (1) angezeigten Bedienungsanweisung und zum Eingeben der für die gewünschte Verarbeitung notwendigen Daten;
eine Betriebssteuereinrichtung (4) zum Steuern des Betriebs der Tasteneingabeeinrichtung (2) und der Anzeigeeinrichtung (1);
eine Sprach-Hauptsteuereinrichtung (6), die gesteuert wird, wenn die mittels der Tasteneingabeeinrichtung (2) gewählte Verarbeitung eine Verarbeitung bezüglich einer Sprachkommunikation ist, zum Steuern des Betriebs bezüglich der Sprachkommunikation; und
eine Bild-Hauptsteuereinrichtung (8), die gesteuert wird, wenn die mittels der Tasteneingabeeinrichtung (2) gewählte Verarbeitung eine Verarbeitung bezüglich einer Bildkommunikation ist, zum Steuern des Betriebs bezüglich der Bildkommunikation.

9. Verfahren zum Steuern eines Kommunikationsendgeräts, das mit einem diensteintegrierenden Digitalnetz verbunden ist, wobei das Gerät aufweist: eine Vielzahl von unabhängig betriebsfähigen Kommunikationssteuereinrichtungen (6, 8), eine Vielzahl von unabhängig betriebsfähigen Kommunikations-Netzsteuereinrichtungen (11, 12) zum Ausführen von Rufvorgängen bezüglich eines abgehenden Rufs oder eines ankommenden Rufs zu oder von einer diensteintegrierenden Digitalnetz-Leitung (14) mit zwei Datenkanälen und eine Netzschnittstelleneinrichtung (13) für Zuweisungsvorgänge der Vielzahl von Netzsteuereinrichtungen (11, 12) an die beiden Datenkanäle der diensteintegrierenden Digitalnetz-Leitung (14), dadurch gekennzeichnet, daß:
wenn eine aus der Vielzahl von Kommunikationssteuereinrichtungen (6, 8) über einen ersten der Datenkanäle mittels einer aus der Vielzahl von Netzsteuereinrichtungen (11, 12) mit einem Teilnehmerendgerät kommuniziert und ein ankommender Ruf von einem anderen Teilnehmerendgerät, das ein anderes als das erste Teilnehmerendgerät ist, zu einer anderen aus der Vielzahl von Kommunikationssteuereinrichtungen (6. 8) über einen zweiten der Datenkanäle empfangen wird, die Netzschnittstelleneinrichtung (13) die andere aus der Vielzahl von Kommunikationssteuereinrichtungen (6, 8), die sich in einem Freizustand befindet, dem anderen der Datenkanäle zuweist und die andere aus der Vielzahl von Kommunikationssteuereinrichtungen (6, 8) die Kommunikation mit dem anderen Teilnehmerendgerät über die andere aus der Vielzahl von Netzsteuereinrichtungen (11, 12) ausführt.

10. Verfahren nach Anspruch 9, dadurch gekennzeichnet, daß, wenn eine aus der Vielzahl von Kommunikationssteuereinrichtungen (6, 8) über einen der beiden Datenkanäle mittels einer aus der Vielzahl von Netzsteuereinrichtungen (11, 12) mit einem Teilnehmerendgerät kommuniziert und ein Ruf von einer anderen aus der Vielzahl von Kommunikationssteuereinrichtungen (6, 8) an ein anderes Teilnehmerendgerät abgeht, die Netzschnittstelleneinrichtung (13) den anderen der beiden Datenkanäle der anderen aus der Vielzahl von Netzsteuereinrichtungen (11, 12), die sich in einem Freizustand befindet. zuweist und die andere aus der Vielzahl von Kommunikationssteuereinrichtungen (6, 8) die Kommunikation mit dem anderen Teilnehmerendgerät über die andere aus der Vielzahl von Netzsteuereinrichtungen (11, 12) ausführt.

## Revendications

1. Appareil de terminal de communication incluant une pluralité de moyens de commande de communication activables indépendamment (6, 8) et connectés à un réseau numérique à intégration de services par l'intermédiaire d'une ligne de réseau numérique à intégration de services (14) comportant deux canaux de données, caractérisé en ce que ledit appareil comprend:
une pluralité de moyens de commande de réseau activables indépendamment (11, 12) pour exécuter des procédures d'appel en relation avec un appel sortant ou un appel entrant appliqué sur ledit ou provenant dudit réseau numérique à intégration de services; et
un moyen d'interface de réseau (13) pour allouer respectivement des opérations de la pluralité de moyens de commande de réseau (11, 12) aux deux canaux de données de ladite ligne de réseau numérique à intégration de services (14);
un moyen (4, 13) pour connecter un premier moyen de la pluralité de moyens de commande de communication (6, 8) à l'un de la pluralité de moyens de commande de réseau (11, 12) afin de communiquer avec un terminal de première partie par l'intermédiaire d'un premier des canaux de données; et
un moyen (4, 13) pour connecter un autre de la pluralité de moyens de commande de communication (6, 8) à un autre de la pluralité de moyens de commande de réseau (14, 12) afin de communiquer avec un terminal de seconde partie par l'intermédiaire du second des canaux de données en réponse à un appel entrant provenant dudit terminal de seconde partie, lorsque ledit premier de ladite pluralité de moyens de commande de communication (6, 8) est en communication avec le terminal de première partie.

2. Appareil de terminal de communication selon la revendication 1, caractérisé en ce que la pluralité de moyens de commande de communication (6, 8) comprend:
un moyen de commande vocale (6) connecté audit un de la pluralité de moyens de commande de réseau (11, 12) pour exécuter un traitement d'entrée/sortie d'un signal vocal émis ou reçu par l'intermédiaire de l'un de la pluralité de moyens de commande de réseau (11, 12);
un moyen de commande d'émission d'image (8) connecté à un autre de la pluralité de moyens de commande de réseau (11, 12) pour exécuter une commande d'émission de données d'image émises ou reçues par l'intermédiaire dudit autre de la pluralité de moyens de commande de réseau (11, 12); et
un moyen de commande d'image (5) pour exécuter un traitement d'entrée/sortie des données d'image commandées par ledit moyen de commande d'émission d'image (8).

3. Appareil de terminal de communication selon la revendication 1, caractérisé en ce que la pluralité de moyens de commande de communication (6, 8) comprend:
un premier moyen de commande d'émission d'image (8a) connecté à l'un de la pluralité de moyens de commande de réseau (12) pour exécuter une commande d'émission de données d'image émises ou reçues par l'intermédiaire dudit un de la pluralité de moyens de commande de réseau;
un second moyen de commande d'émission d'image (8b) connecté à un autre de la pluralité de moyens de commande de réseau (11), pour exécuter une commande d'émission de données d'image émises ou reçues par l'intermédiaire dudit autre de la pluralité de moyens de commande de réseau (11); et
un moyen de commande d'image (5) pour exécuter un traitement d'entrée/sortie des données d'image commandées par lesdits premier et second moyens de commande d'émission d'image (8a, 8b).

4. Appareil de terminal de communication selon la revendication 1, caractérisé en ce que la pluralité de moyens de commande de communication comprend:
un moyen de commande vocale (6) connecté à la pluralité de moyens de commande de réseau (11, 12) pour exécuter un traitement d'entrée/sortie d'un signal vocal émis ou reçu par l'intermédiaire de la pluralité de moyens de commande de réseau (11, 12);
un moyen d'entrée/sortie vocale (63) pour entrer/sortir le signal vocal émis ou reçu par l'intermédiaire de l'un de la pluralité de moyens de commande de réseau; et
un moyen de mémoire (7) pour stocker le signal vocal reçu par l'intermédiaire d'un autre de la pluralité de moyens de commande de réseau (11, 12) et pour lire le signal vocal émis par l'intermédiaire dudit moyen de commande de réseau (11, 12).

5. Appareil de terminal de communication selon la revendication 1, caractérisé en ce que la pluralité de moyens de commande de communication comprend:
un moyen de commande vocale (6) connecté à la pluralité de moyens de commande de réseau (11, 12). pour exécuter un traitement d'entrée/sortie d'un signal vocal émis ou reçu par l'intermédiaire de la pluralité de moyens de commande de réseau (11, 12); et
un moyen d'entrée/sortie vocale (63) pour entrer/sortir le signal vocal émis ou reçu par l'intermédiaire dudit moyen de commande de réseau,
ledit moyen de commande vocale (6) comprenant:
un moyen de commande de tonalité de signal entrant (61), pour superposer une tonalité d'appel entrant sur une première communication vocale en utilisant l'un desdits moyens de commande de réseau (11, 12), lorsqu'un appel entrant demandant en requête une seconde communication vocale est détecté; et
un moyen (65) pour réaliser une commutation depuis la première communication vocale jusqu'à la seconde communication vocale.

6. Appareil de terminal de communication selon la revendication 5, caractérisé en ce que ledit moyen de commande vocale (6) comprend un moyen de commande de tonalité de maintien (64) pour émettre une tonalité de maintien sur la partie de la première communication vocale lorsque la première communication vocale est commutée à la seconde communication vocale.

7. Appareil de terminal de communication selon la revendication 1, caractérisé en ce que la pluralité de moyens de commande de communication (6, 8) comprend:
un moyen de commande vocale (6) connecté à la pluralité de moyens de commande de réseau (11, 12), pour exécuter un traitement d'entrée/sortie d'un signal vocal émis ou reçu par l'intermédiaire de la pluralité de moyens de commande de réseau (11, 12); et
un moyen d'entrée/sortie vocale (63) pour entrer/sortir le signal vocal émis ou reçu par l'intermédiaire dudit moyen de commande de réseau (11, 12);
ledit moyen de commande vocale (6) comprenant un moyen de commutateur (65) pour émettre en sortie un signal vocal entré depuis le moyen d'entrée vocale (63) sur la pluralité de moyens de commande de réseau (11, 12), pour superposer le signal vocal sur un signal vocal émis en sortie depuis la pluralité de moyens de commande de réseau (11, 12) et pour émettre en sortie le signal vocal superposé sur ledit moyen de sortie vocale (63).

8. Appareil de terminal de communication selon la revendication 1, comprenant en outre:
un moyen d'affichage (1) pour afficher un guide de fonctionnement lorsqu'un appel est créé;
un moyen d'entrée par touches (2) pour sélectionner un traitement souhaité conformément au guide de fonctionnement affiché par ledit moyen d'affichage (1) et pour entrer des données nécessaires pour le traitement sélectionné;
un moyen de commande de fonctionnement (4) pour commander des fonctionnements dudit moyen d'entrée par touches (2) et dudit moyen d'affichage (1);
un moyen de commande principale vocale (6) piloté lorsque le traitement sélectionné par ledit moyen d'entrée par touches (2) est un traitement en relation avec une communication vocale, pour commander le fonctionnement en relation avec la communication vocale; et
un moyen de commande principale d'image (8) piloté lorsque le traitement sélectionné par ledit moyen d'entrée par touches (2) est un traitement en relation avec une communication d'image, pour commander le fonctionnement en relation avec la communication d'image.

9. Procédé de commande d'un appareil de terminal de communication connecté à un réseau numérique à intégration de services, l'appareil incluant une pluralité de moyens de commande de communication activables indépendamment (6, 8), une pluralité de moyens de commande de réseau de communication activables indépendamment (11, 12) pour exécuter des procédures d'appel en relation avec un appel sortant ou un appel entrant appliqué sur ou provenant d'une ligne de réseau numérique à intégration de services (14) comportant deux canaux de données, et un moyen d'interface de réseau (13) pour allouer des fonctionnements de la pluralité de moyens de commande de réseau (11, 12) aux deux canaux de données de ladite ligne de réseau numérique à intégration de services (14), caractérisé en ce que:
lorsque l'un de la pluralité de moyens de commande de communication (6, 8) communique avec un terminal de première partie par l'intermédiaire d'un premier des canaux de données au moyen de l'un de la pluralité de moyens de commande de réseau (11, 12) et qu'un appel arrivant provenant d'un terminal d'une autre partie, qui est différent dudit terminal de première partie, et arrivant sur un autre de la pluralité de moyens de commande de communication (6, 8) est reçu par l'intermédiaire d'un second des canaux de données, ledit moyen d'interface de réseau (13) alloue ledit autre de la pluralité de moyens de commande de communication (6, 8), qui est dans un état d'attente, audit second des canaux de données. et ledit autre de la pluralité de moyens de commande de communication (6, 8) met en oeuvre une communication avec ledit terminal d'une autre partie par l'intermédiaire dudit autre de la pluralité de moyens de commande de réseau (11, 12).

10. Procédé selon la revendication 9, caractérisé en ce que, lorsque l'un de la pluralité de moyens de commande de communication (6, 8) communique avec un terminal d'une première partie par l'intermédiaire de l'un des deux canaux de données au moyen de l'un de la pluralité de moyens de commande de réseau (11, 12), et qu'un appel est créé depuis un autre de la pluralité des moyens de commande de communication (6, 8) sur un terminal d'une autre partie, ledit moyen d'interface de réseau (13) alloue l'autre des deux canaux de données à un autre de la pluralité de moyens de commande de réseau (11, 12,) qui est dans un état d'attente et ledit autre de la pluralité de moyens de commande de communication (6, 8) met en oeuvre une communication avec ledit terminal d'une autre partie par l'intermédiaire dudit autre de la pluralité de moyens de commande de réseau (11, 12).
